# EUROPEAN PATENT APPLICATION

(11) **EP 4 571 694 A1**
(43) Date of publication of application: **18.06.2025**
(21) Application number: 24217211.2
(22) Date of filing: 03.12.2024
(51) Int. Cl.: G07F 17/32, A63F 13/00, G06F 3/048, G07F 17/34

(54) **A METHOD FOR A GAMING SYSTEM**

(30) Priority: 14.12.2023 SE 2351428
(71) Applicant: Play'n Go Marks Ltd, VLT1434 Valletta (MT)
(72) Inventor: JONSSON, Mikael, VALLETTA, VLT1434 (MT)
(74) Representative: Kransell & Wennborg KB

(57) **Abstract**

The present disclosure relates to a computer implemented method performed by a gaming system. In particular, the present disclosure relates to a scheme for further improving a randomness in a game provided by means of the gaming system by dynamically adjusting a dimension of a grid used when playing the game. The present disclosure also relates to a corresponding gaming system and a computer program product.

## Description

### TECHNICAL FIELD

The present disclosure relates to a computer implemented method performed by a gaming system. In particular, the present disclosure relates to a scheme for further improving a randomness in a game provided by means of the gaming system by dynamically adjusting a dimension of a grid used when playing the game. The present disclosure also relates to a corresponding gaming system and a computer program product.

### BACKGROUND

Games of chance, particularly in the form of online gaming, have become a widely recognized form of entertainment. The sustained success of the gaming industry is heavily reliant on its ability to innovate, introducing novel games and gaming concepts that captivate the gaming audience. This innovative drive is notably evidenced by the industry's adaptation to the digital era, with the Internet and online gaming platforms spearheading a new era of game accessibility and diversity.

In the online gaming realm, it is a continual pursuit to engage both new and existing players through inventive means, ensuring that they are drawn to, and retained by, the gaming operator's site. One such method involves the introduction of unexpected game scenarios, which hold the potential to both intrigue and motivate players. The allure of these scenarios lies in their ability to emerge unexpectedly, thereby heightening the gaming experience with the prospect of novel and unforeseen outcomes.

Introducing these elements of surprise within the game can further have the beneficial side effect of increasing the player's potential payout. Such scenarios can augment the value of a player's bet, providing an additional layer of excitement. However, this potential for increased payouts must be carefully regulated by the gaming operator to ensure that the payouts remain within manageable limits. There exists, therefore, a continuous need to balance the game's appeal, via the potential for enhanced payouts, with the imperative for the operator to maintain comprehensive control over the game's operational parameters.

### SUMMARY

According to an aspect of the present disclosure, the above is at least partly met by a computer implemented method performed by a gaming system, the gaming system comprising a server arranged in communication with an electronic user device using a network connection, the electronic user device comprising a display screen, the gaming system arranged to operate a series of consecutive games, wherein the method comprises, for each of the plurality of consecutive games, the steps of receiving, at the server, a request from the electronic user device to play a game provided by the server, the request comprising a wagering bet, forming, using the server, a table in the form of a grid, wherein a dimension of the grid is variable, the grid comprises a number of cells matching the variable grid dimension, the number of cells of the table is variable between a predefined minimum number of cells and a predefined maximum number of cells, and the grid comprises an upper end and a lower end, generating, at the server, a set of elements corresponding to the cells of the table, each generated element being one of a plurality of predefined element types, populating, using the server, the cells of the table with the set of elements, directing, using the server, the electronic user device to display the table at the display screen, determining, using the server and by applying a predefined matching scheme, a matching level between the cells populating the table and each of a plurality of predefined cluster formations stored at the server, determining, using the server, a gaming outcome based on the matching level and the wagering bet, removing, using the server, a first number of cells at the lower end of the table, adding, using the server, a second number of cells at the upper end of the table, wherein the second number of cells at the upper end of the table are populated with a further set of the predefined element types.

In accordance with the present disclosure, the gaming interaction primarily involves a digital representation of a table displayed on the user's device, structured as a grid composed of multiple cells in an organized layout of rows and columns. Each cell is filled with an element, which could range from various symbols to numerical figures, each selected to align with the specific characteristics and rules of the game at hand. For example, where the game is defined as a virtual slot game, it is presented on a screen with virtual elements that simulate the experience of traditional slot machines without the need for physical components.

Furthermore, in line with the present disclosure, the operational scheme according to the present disclosure addresses the limitations of conventional gaming systems, where rigid user interfaces and static gameplay structures often constrain player engagement and strategic depth. In comparison, the scheme according to the present disclosure introduces a flexible, grid-based table, which dynamically evolves by adding and removing cells at the upper and lower ends, respectively. Such an implementation steps away from the traditional fixed-grid format, offering a more fluid and engaging gaming experience.

The dynamic adjustment of the dimensions of the grid, specifically the removal of cells at the lower end and addition at the upper end, introduces a novel element of controlled variability to the gaming process. By synchronizing the removal and addition of cells with the predefined matching scheme and the set of predefined element types, the system ensures that each adjustment is both random and strategically significant. Such an evolving grid structure creates opportunities for the player to encounter new cluster formations and potential matches, influenced by the specific changes in grid composition. As a result, the variability is not merely superficial but actively contributes to the gameplay, enabling each turn to present a unique combination of challenge and reward. The hereby defined implementation enhances engagement by maintaining a balance between randomization and structured progression, offering players a constantly refreshing gaming experience.

As defined above, the role of the game server is highly important in relation to the suggested enhanced solution. The server not only generates and populates the grid with diverse elements but also intelligently manages the display on the user's device and the determination of game outcomes. As such, the game outcomes are directly linked to the evolving state of the grid, influenced by the variable cell numbers and their strategic placement, and also enhances the overall gaming experience by enabling each player's decisions to directly affect the game's progression, thereby making each round distinct and immersive.

Generally, when the operational scheme according to the present disclosure is applied to a game concept provided by the server, it may be possible to increase the randomization of the game, thus potentially allowing for increasing winning possibilities for a player participating in the game. An advantage following such a possibility is an improved attraction power to the game, thus potentially allowing for the player to remain playing the game for an increased duration as compared to previously known similar operational schemes. This could potentially be beneficial to both the player participating in the game and the gaming operator providing the game. Additionally, allowing for an increased randomization of the game may potentially further increase the security of the game, since known general computer-based issues relating to the generation of randomized material to the game are minimized.

Furthermore, the operational scheme according to the present disclosure uniquely capitalizes on server-side computational resources to handle both data processing and bandwidth optimization. By streamlining the server algorithms, the system not only reduces computational overhead but also improves the use of network bandwidth. The processed game data is then efficiently transmitted to the electronic user device, ensuring a fluid and seamless gaming experience. This amalgamation of computational efficiency and bandwidth optimization serves a dual purpose, it expedites the gaming process for players while also conserving valuable server resources. Consequently, the system can accommodate a greater number of players without compromising on performance, potentially enhancing both the user experience and the game operator's revenue streams.

The gaming system may in some embodiments employ a multi-level data compression technique on the server to minimize the volume of data transmitted to each electronic user device. The server in such embodiments prioritizes critical game state information and visual updates, reducing non-essential elements or repetitive game data wherever possible. The suggested compression mechanism not only conserves bandwidth but also enables faster delivery of relevant data to the client devices, ensuring that high-priority information is promptly available on the user's display screen. By compressing outgoing data streams based on the game state and the interaction level, the server enables optimal network use without impacting the graphical quality or responsiveness on the electronic user devices, thus enhancing the overall gaming experience while maintaining server and network efficiency.

Furthermore, for ensuring that the determination of the gaming outcome is performed with a minimum amount of perceived delay in the progression of the game it is desirable to apply a computational efficient matching scheme. Possible schemes that can be used in relation to the present disclosure include different forms of so-called graph-based image processing methods that today find usage within e.g. the computer vision field, such as finding paths in images

The expression "predefined cluster formations" may generally be seen as "adjacently" arranged cells within the grid, but may generally be dependent on the specific implementation of the present scheme. For example, adjacently may be defined as arranged on the same row of the table or in the same column of the table. It may however also be possible to allow other element formations to be seen as adjacently, such for example comprising a combination of cells arranged both on different columns and on different rows, but at least sharing a side of a cell to another cell holding a matching element. Other definitions of element formations comprising matching elements are of course possible and within the scope of the present disclosure. Such a further example of an element formation may be where matching elements form specific "shapes", but not necessarily share a cell side with each other. Thus, two adjacent cells may possibly, in some embodiments, be seen as two cells at least having "touching" cell corners.

Generally, the cells of the table include four sides, formed as rectangles. However, the cells of the table may have any number of sides from three and upwards. Accordingly, the cells may be shaped as triangles, rectangles/squares, octagons, etc. It could also be possible to combine differently shaped cells in the same table.

As indicated above, the table is populated with a different element, where the elements are selected from a group of predefined element types. The group of predefined element types may in some embodiments comprise the generic element types that are common to slot games, etc., for example including "bar" symbols or elements from a deck of cards. Other element types, possibly specific for the game, are of course possible and within the scope of the present disclosure. The type of elements may also include at least one generic element type, in some embodiments defined as a wild card or a joker element, that may be matchable to all of the plurality of predefined element types. As such, the generic element type may be equally matchable with e.g. a number as well as a symbol.

In line with the present disclosure, at least one of the first and the second number of cells are preferably selected based on a present number of cells compared to the minimum and maximum number of cells. Accordingly, by in such embodiment applying a "check" in comparison to the predefined minimum and maximum number of cells it is made possible to ensure that the grid is fluctuating in a controlled manner and thus follows the general extension of the grid matching the display screen of the user device.

Preferably, at least one of the first and the second number of cells are at least partly randomly selected, for example using a random number generator comprised with the server. The random number generator is in such an embodiment adapted to produce random outcomes, that in turn are used to when selecting the first and the second number of cells. The incorporation of a random number generator, with suitable limitations to the range of the random numbers as generated by the random number generator, ensures that the grid (again) maintains a desirable size suitable for being displayed at the user device. It should be understood that the random number generator must not be a "true" random number generator, instead a semi-random number generator could be used.

In one embodiment, the second number of cells are selected to match a width of the grid, and the width of the grid is fixed for the series of consecutive games. This design choice ensures a consistent visual and interactive experience for the player throughout the game series. By maintaining a fixed width, the game provides a familiar framework for players, allowing them to develop and apply strategies based on a stable grid dimension. Simultaneously, this approach allows the height of the grid to vary, introducing a dynamic aspect to the gameplay and challenging the player to adapt to the changing grid height within the known boundaries of the grid's width.

Along the same line of discussion, in one embodiment the width of the grid is fixed and the height of the grid is variable. This configuration strikes a balance between a consistent play area and a variable challenge. By fixing the width of the grid, the game ensures that the player interface remains constant, providing a stable and predictable area for interaction. Meanwhile, the variability in height introduces an element of unpredictability and complexity, compelling players to continuously adapt their strategies as the vertical dimension of the grid expands or contracts, adding depth and variety to the gaming experience.

In a preferred embodiment by variability in height it means that a random number selected number of cells are removed from a lower side of the grid. The number of cells removed from the lower side of the grid may vary from column to column thereby creating a variable grid shape. The constantly variable grid shape will also account for variable paylines and thus variable winning probabilities from round to round. Meanwhile the grid height will have an upper limit and a lower limit to maintain a grid size that is neither too small nor too large to fit in the expected display area. For each round a new row of elements will be added to the upper most part of the grid or in other embodiments the opposite side of where the symbols are being removed. This new row of elements will therefore again change the overall dimension of the grid, with some columns increasing in size beyond the conventional size of the grid whilst other columns decreasing in size.

In a preferred embodiment of the present disclosure, the predefined matching scheme involves the identification of patterns or sequences of elements within the grid, with the matching level being determined based on factors such as the number and type of these patterns and sequences. This technical feature elevates the game beyond mere chance-based outcomes, incorporating a sophisticated algorithmic analysis of the grid. The server's advanced computational capabilities are leveraged to systematically identify complex patterns and sequences, providing a gameplay experience that is both intellectually stimulating and strategically demanding.

Moreover, the integration of these technical elements into the gaming system showcases an innovative use of data pattern recognition and sequence analysis algorithms, commonly applied in more traditional fields of technology. This approach not only enhances the game's appeal by adding a layer of skill-based strategy but also aligns the gaming experience with the rigorous standards of technical innovation required by patent offices. By quantifying the matching level based on a detailed analysis of the grid's state, the game effectively transforms a conventional grid into a dynamic puzzle, where each player's cognitive skills and strategic thinking are key to success.

Preferably, wherein at least a portion of the set of elements is updated by the server, for each of the plurality of consecutive games. This iterative refreshment of elements, from the predefined type of elements, serves to ensure a dynamic and unpredictable gaming environment, enhancing the player's engagement by presenting new potential combinations and outcomes with every game played.

It should however be noted that not all of the grid must be updated with new elements for each of the plurality of consecutive games. In fact, in some embodiment of the present disclosure the set of elements may comprise at least one of a multiplication factor and a sticky symbol. Such element may potentially, depending on the element type remain with the grid for a predefined number of consecutive games such that if a sticky symbol is located on a lowermost portion of the grid, no cells will be removed from that column until the sticky symbol is removed from the grid.

Furthermore, the process of updating at least a portion of the set of elements for each game introduces an element of variety that is crucial to maintaining a user's interest over prolonged gaming sessions. It effectively combats the monotony that can arise from repetitive gameplay, thereby sustaining the excitement and challenge intrinsic to the gaming experience. Such an implementation also allows for a strategic depth within the game, as the updated elements can be designed to interact with the game's progression and the player's achievements. It may also be possible to utilize the updating of elements as a means to introduce special events or promotions within the game, providing an avenue for game operators to engage with players through time-limited opportunities or rewards.

Preferably, the multiplication factor is arranged to be more than 1. Such a definition of the multiplication actor will dynamically affect the overall outcome of the game. The multiplication factor will also drastically reduce the level of predictability of the game, effectively and drastically increasing the randomness of the game, while being computationally efficient for the server performing the novel gaming scheme.

In a possible embodiment, the table is graphically visualized as a plurality of parallel reels. This visualization exploits the visual dynamics of spinning reels, pivotal in generating excitement and anticipation. Each reel's spin harbors the potential for winning combinations, thus maintaining gameplay that is visually engaging and emotionally stimulating for the player.

Additionally, representing the table in this manner is particularly advantageous for game developers and operators. It provides a standardized visual framework that can be easily customized, updated, and themed, allowing for the creation of diverse game offerings within the same structural paradigm. This flexibility in visual design, achieved without altering the core game mechanics, ensures that the gaming method retains its robustness and versatility for various game implementations.

In some embodiments of the present disclosure the game is a game of chance, such as for example a slot game, where the player is placing a bet to be allowed to participate in the game. The gaming outcome may in such an embodiment be dependent on the bet placed by the player.

As indicated above, the server is in charge of controlling the electronic user device to display the table as well as the gaming outcome at the display screen of the electronic user device. In some embodiments the electronic user device is adapted to present a graphical user interface (GUI) at the display screen. The server may in a corresponding manner be adapted to a graphical representation of at least one of the tables, the gaming outcome and the updated table, to be distributed to the electronic user device, where the graphical representation is then presented within the GUI.

In addition to managing game state updates, the server typically functions as the control center for all player interactions and bet-related processes. Specifically, the server receives and processes each player's bet input, calculating potential gaming outcomes based on the wagering parameters, predefined matching schemes, and applicable multipliers or odds values. By handling these calculations centrally, the server ensures that all bets, outcomes, and rewards are accurately aligned with the game's rules and odds. The client device receives only the resulting outcome and necessary visual updates, preserving both the integrity and fairness of the gaming process while minimizing the client's computational load. Such a centralized approach enables the operator to maintain robust control over game mechanics and regulatory compliance across multiple client devices and locations.

Such a GUI may also be arranged to allow the player to directly interact with the server, for example allowing the player to control his/her participation in the game as well as to control a size of the bet placed when participating in the game.

Within the context of the present disclosure the expression "forming a graphical representation" should be interpreted broadly. Specifically, it should be understood that the server in some embodiment may be configured to only form a collection of "meta-data" (here corresponding to the graphical representation) that will be rendered at the frontend, such as within the GUI of the electronic user device. However, in another embodiment it may be the other way around, meaning that the server will essentially form an image (here corresponding to the graphical representation) that then will be displayed within the GUI of the electronic user device. Further alternative implementations along the same mutations are possible and within the scope of the present disclosure. Additionally, it may also be possible to allow the graphical representation to be set differently for different game operators, players or groups of players. The graphical representation may also be dependent on e.g. the geographical location of the players, such as dependent on city, country or continent where the player is located/registered.

Within the context of the present disclosure, it should be understood that it in some embodiments so that it may be possible to allow the server to control if a specific electronic user device is to be allowed to apply the scheme according to the present disclosure. Such control may for example be dependent on a geographical location of the electronic user device. Possibly, the geographical location may be selected from a group comprising a city, a country and a continent.

According to another aspect of the present disclosure there is provided a gaming system arranged to operate a series of consecutive games, the gaming system comprising a server arranged in communication with an electronic user device using a network connection, the electronic user device comprising a display screen, wherein the server is arranged to, for each of the plurality of consecutive games receive a request from the electronic user device to play a game provided by the server, the request comprising a wagering bet, form a table in the form of a grid, wherein a dimension of the grid is variable, the grid comprises a number of cells matching the variable grid dimension, the number of cells of the table is variable between a predefined minimum number of cells and a predefined maximum number of cells, and the grid comprises an upper end and a lower end, generate a set of elements corresponding to the cells of the table, each generated element being one of a plurality of predefined element types, populate the cells of the table with the set of elements, direct the electronic user device to display the table at the display screen, determine, by applying a predefined matching scheme, a matching level between the cells populating the table and each of a plurality of predefined cluster formations stored at the server, determine a gaming outcome based on the matching level and the wagering bet, remove a first number of cells at the lower end of the table, add a second number of cells at the upper end of the table, wherein the second number of cells at the upper end of the table are populated with a further set of the predefined element types. This aspect of the present disclosure provides similar advantages and embodiments as discussed above in relation to the previous aspects of the present disclosure.

Preferably, the gaming system is a cloud-based computing system, and the server is a cloud server. Thus, the computing power provided by means of the invention may be distributed between a plurality of servers, and the location of the servers must not be explicitly defined. Advantageous following the use of a cloud-based solution is also the inherent redundancy achieved.

In some embodiments the electronic user devices may be selected to include e.g. a computer (laptop/stationary), a mobile phone, a tablet, a (gaming) consoles or any other gaming device and gambling terminals. The GUI may in some embodiments be allowed to depend on the type of electronic user device.

According to a still further aspect of the present disclosure there is provided a computer program product comprising instructions which, when executed by a computer or processor, cause a gaming system to operate a series of consecutive games, the gaming system comprising a server arranged in communication with an electronic user device using a network connection, the electronic user device comprising a display screen, the gaming system arranged to operate a series of consecutive games, wherein the computer program product is executed for each of the plurality of consecutive games and comprises code for receiving, at the server, a request from the electronic user device to play a game provided by the server, the request comprising a wagering bet, code for forming, using the server, a table in the form of a grid, wherein a dimension of the grid is variable, the grid comprises a number of cells matching the variable grid dimension, the number of cells of the table is variable between a predefined minimum number of cells and a predefined maximum number of cells, and the grid comprises an upper end and a lower end, code for generating, at the server, a set of elements corresponding to the cells of the table, each generated element being one of a plurality of predefined element types, code for populating, using the server, the cells of the table with the set of elements, code for directing, using the server, the electronic user device to display the table at the display screen, code for determining, using the server and by applying a predefined matching scheme, a matching level between the cells populating the table and each of a plurality of predefined cluster formations stored at the server, code for determining, using the server, a gaming outcome based on the matching level and the wagering bet, code for removing, using the server, a first number of cells at the lower end of the table, code for adding, using the server, a second number of cells at the upper end of the table, wherein the second number of cells at the upper end of the table are populated with a further set of the predefined element types. Also this aspect of the present disclosure provides similar advantages and embodiments as discussed above in relation to the previous aspects of the present disclosure.

The computer program product is typically executed using a computing device comprised with the server, preferably including a microprocessor or any other type of computing device. Similarly, a software executed by the server for operating the gaming system may be stored on a computer readable medium, being any type of memory device, including one of a removable nonvolatile random access memory, a hard disk drive, a floppy disk, a CD-ROM, a DVD-ROM, a USB memory, an SD memory card, or a similar computer readable medium known in the art. Accordingly, operation of the gaming system may be at least partly automated, implemented as e.g. software, hardware and a combination thereof.

Further features of, and advantages with, the present disclosure will become apparent when studying the appended claims and the following description. The skilled addressee realizes that different features of the present disclosure may be combined to create embodiments other than those described in the following, without departing from the scope of the present disclosure.

### BRIEF DESCRIPTION OF THE DRAWINGS

The various aspects of the present disclosure, including its particular features and advantages, will be readily understood from the following detailed description and the accompanying drawings, in which:
Fig. 1 illustrates an exemplary gaming system according to a currently preferred embodiment of the present disclosure,
Fig. 2 provides an exemplary illustration of a typical graphical user interface (GUI) for use in playing a game,
Figs. 3A - 3G present exemplary illustrations of operations of different tables according to different embodiments of the present disclosure,
Figs. 4A - 4C present further exemplary illustrations of operations of different tables according to different embodiments of the present disclosure, and
Fig. 5 is a flow chart illustrating the exemplary steps for operating the gaming system as shown in Fig. 1.

### DETAILED DESCRIPTION

The present disclosure will now be described more fully hereinafter with reference to the accompanying drawings, in which currently preferred embodiments of the present disclosure are shown. This present disclosure may, however, be embodied in many different forms and should not be construed as limited to the embodiments set forth herein; rather, these embodiments are provided for thoroughness and completeness to fully convey the scope of the present disclosure to the skilled addressee. Like reference characters refer to like elements throughout.

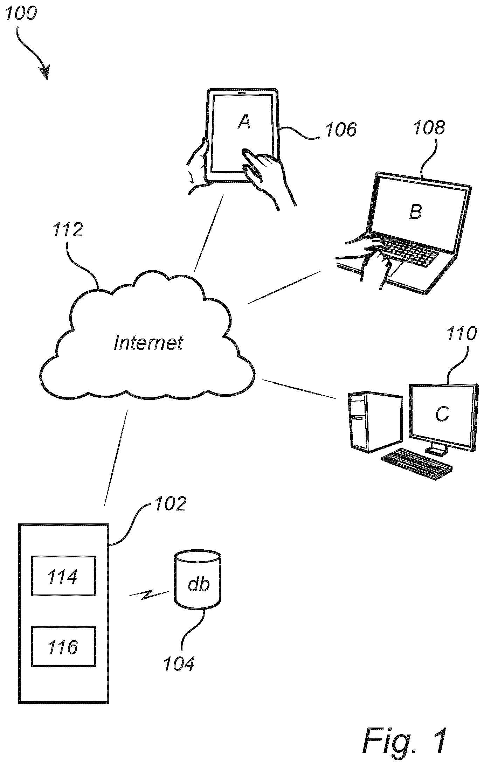

Referring now to the drawings and Fig. 1 in particular, there is depicted a gaming system 100 in which an online game, such as a slot game, may be played according to a currently preferred embodiment of the present disclosure. The system architecture illustrated in Fig. 1 depicts a system environment in which systems, methods, apparatus, computer-readable mediums and data structures consistent with the principles of some embodiments of the present disclosure may be included. It may be appreciated that the components of system 100 may be implemented through any suitable combinations of hardware, software, and/or firmware.

As shown in Fig. 1, system 100 includes at least one server 102 and/or at least one gaming database 104. Server 102 and gaming database 104 may be communicably linked to a plurality of electronic user devices in the form of electronic user devices, such as client devices 106, 108, 110, etc. through network 112. The network 112 may be wired or wireless, including for example wired connections like a building LAN, a WAN, an Ethernet network, an IP network, etc., and wireless connections like WLAN, CDMA, GSM, GPRS, 3G mobile communications, 4G mobile communications, Bluetooth, infrared, or similar. As such, the network 112 may be locally and/or globally provided.

The gaming database 104 may be any type of physical unit on which games reside, such as a machine in a gaming venue, a lottery machine, an electronic game system, etc. Network 112 may be implemented as the Internet, or any local or wide area network, either public or private. Network 112 may also be a hardware system physically connecting some or all of the server 102 and client devices 106, 108, 110. Client devices 106, 108, 110, typically each operated by a player, may be implemented as any computing devices such as a personal computing device, a server, a server network, handheld computing device, slot machine, other gaming machine in a gaming venue such as a betting terminal, a gaming console, lottery machine, an interface in a virtual environment, etc.

It may be appreciated by one of ordinary skill in the art that while only one server, one gaming database, one network and two client devices are depicted, more or fewer servers, more or fewer gaming databases, more networks and more or fewer client devices and/or other devices may reside within system 100.

The elements inside system 100 may include one or more (micro) processors, purpose-built hardware such as, for example, FPGA, ASIC, etc., software systems and applications, software packages, mechanical and electrical parts, etc. Software packages that may be part of server 102, gaming database 104, client devices 106, 108, 110 and network 112 may be recorded on a computer readable medium such as a memory device, RAM, CD/DVD/USB drives, handheld memory device, etc., and/or may be part of a physical device such as one or more (microprocessors or electro-mechanical systems. Any of server 102, gaming database 104, client devices 106, 108, 110, network 112 and further electronic user device 114 may be fixed systems, mobile systems, portable systems, or cloud systems (as discussed above). Fig. 1 shows only three electronic user devices 106, 108, 110, however it should be understood that a general implementation of the present disclosure comprises a large plurality of electronic user devices, possibly greatly above three, such as 100, 1000, 10000, etc.

Although the various components of Fig. 1 are illustrated as discrete elements, it should be recognized that certain operations of some of the various components may be performed by the same physical device, e.g., by one or more microprocessors or other type of devices.

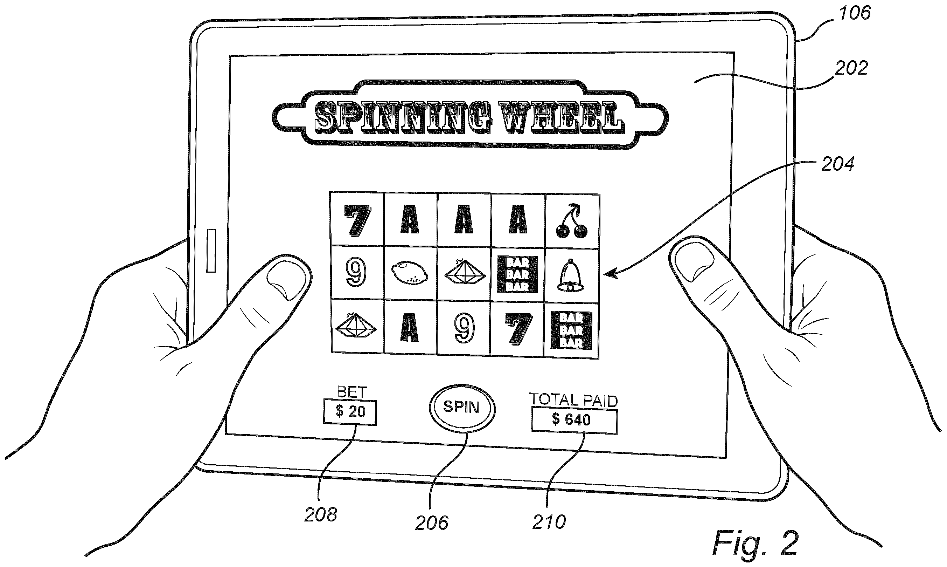

Turning now to Fig. 2 illustrating a graphical user interface (GUI) 202 to be displayed at a client device, such as any of the client devices 106, 108, 110, in the illustrated embodiment provided as an application ("app") or within e.g. a web browser of the portable client device 106 being a tablet. The game to be played at the client device 106 is here shown as an online game of chance in the form of a slot game.

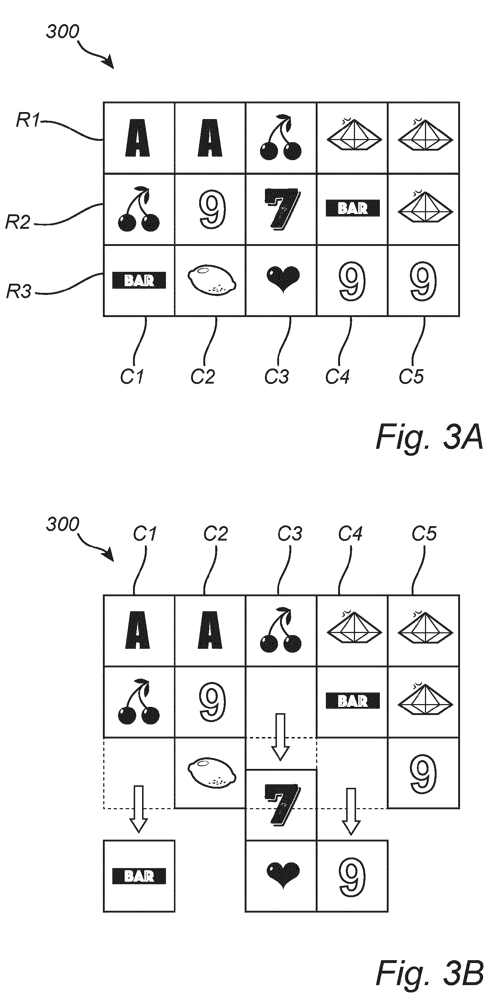

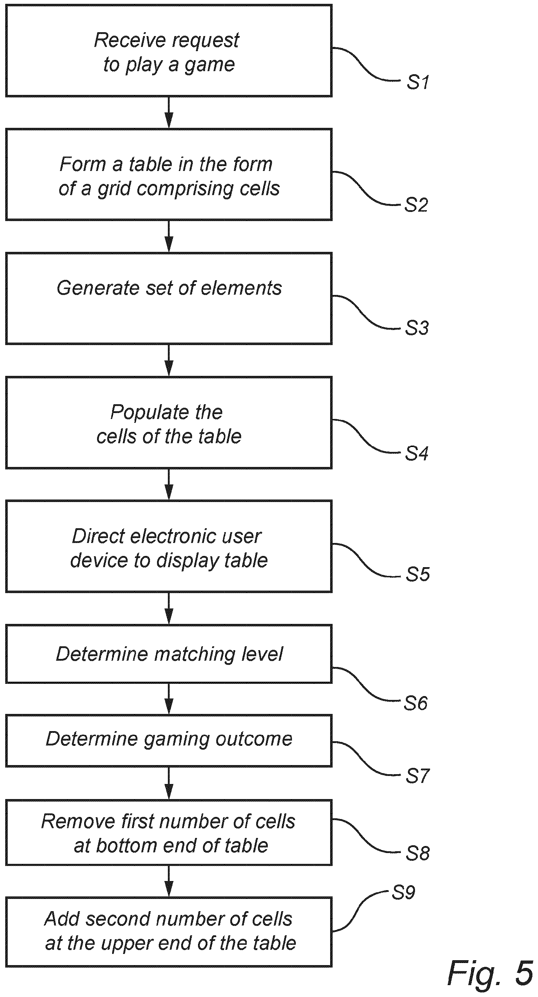

Turning now instead to Figs. 3A - 3G, presented in conjunction with Fig. 5, where the table changes its structure in an exemplary manner during a plurality of consecutive games provided by the server 102.

In line with the present disclosure, the process generally starts with the server 102 receiving a request for playing a game with the server 102, where the request typically is generated by one of the client devices 106, 108, 110, such as client device 106. Subsequently, the server will as a result of the request form, S2, a grid table 300. Here, table 300 is structured as a grid with three horizontal rows (R1 - R3) and five vertical columns (C1 - C5), which constitute the interactive interface for the slot game operated by the gaming system. The table 300 with the three horizontal rows (R1 - R3) and the five vertical columns (C1 - C5) will in the following be seen as defining a "table base structure" holding in total 15 cells. The table base structure, as will be outlined below, be manipulated throughout the game.

The server 102 is arranged to generate, S3, a set of gaming elements, matching the number of cells of the table 300. The server 102 subsequently populates, S4, the cells of table 300 with the generated elements, after which it directs, S5, the electronic user device 106 to display the populated table on the screen. Typically, the cells in the grid are randomly filled with a variety of traditional slot game icons, including but not limited to bars, cherries, and the number seven. These icons provide a visual representation of the range of outcomes elements to be used in conjunction with the slot game according to the present disclosure.

The determination of if there in fact is a win based on the elements now comprised with the table 300, and to what level such a win should be treated is in accordance to the present disclosure determined, S5, using a predefined matching scheme. The predefined matching scheme utilizes a set of criteria to evaluate the element's arrangement on the grid, identifying matching levels that qualify as winning outcomes. When such an alignment is determined, S6, to be above an e.g. previously defined upper threshold, the server 102 responds by provisioning the electronic user device 106 with an indication of a successful gaming outcome. The gamming outcome is generally also related to a size of a wagering bet presented by the player with the initial request to the server 102. Unfortunately for the player operating the electronic user device 106, there is within the grid shown in Fig. 3A the lack of suitable element structures that that would signify a win.

Turning now to Fig. 3B, where the manipulation of the table 300 starts to take place. Specifically, in Fig. 3B and post determining the gaming outcome, the server 102 initiates the removal, S8, of a number of cells at the lower end of table 300. In Fig. 3B this is visually manifested by a portion of the cells at the lower end of the table 300 "dropping", visually represented by arrows and detached cells at the bottom of the table, signifying the game's progression and the changing structure of the playfield. The number of cells (defined as a first number of cells) being removed and at the lower end of the table 300, and from which of the columns C1 - C5, may for example be randomly selected, semi-randomly selected or according to a predefined operational scheme.

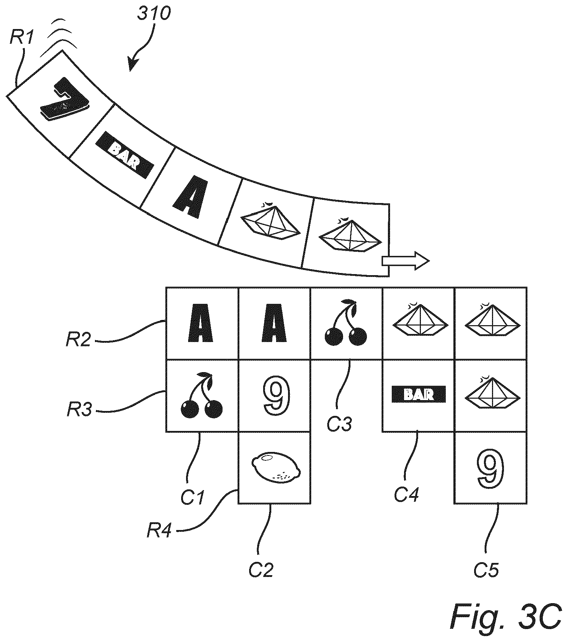

Following the removal of the selected number of cells, Fig. 3C presents an addition, S9, of a new row at the upper end of the table, labeled as row 310. Here a full row with five elements, defined as the second number of elements, is introduced at the top of the table. It may of course be possible to only insert a part of a row. Generally it is desirable to configure the server such that at least one of the first and the second number of cells are selected based on a present number of cells compared to the minimum and maximum number of cells. As an example, the base structured initially comprised exemplary 15 cells. It may for example be possible to allow the number of cells to vary by e.g. 40%, meaning that the table may expand to a maximum of 21 cells and be allowed to be reduced to a minimum of 9 cells. It may also be the case that the elements in a column are not allowed to reach a lower limit and an upper limit, thus columns will not get too small or too long. These numbers are of course just exemplary and other ranges and values may be selected as suitable for the specific implementation.

The server 102 generally populates these newly added cells with a fresh set of elements, creating a new dynamic within the game. This could be visually represented by an animation-like effect, suggesting the row's "flight" into the grid from above.

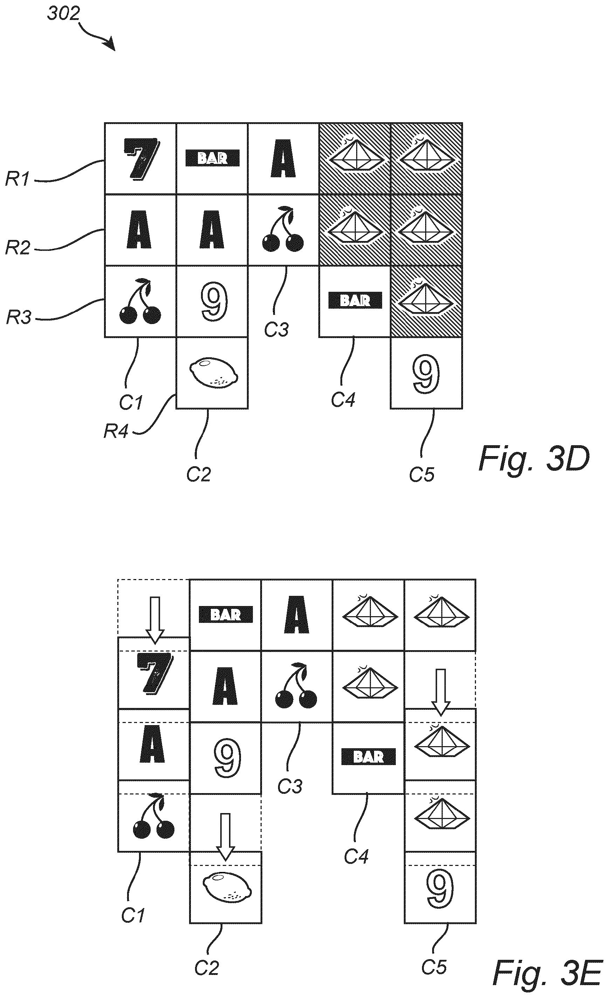

Fig. 3D then demonstrated the updated table structure, now designated as table 302. Fig. 3D captures a moment of success for the player. A "win" is achieved with five diamonds placed in the upper corner of the grid, highlighted, or grayed out, to signify the win. This outcome arrives after the server's 102 evaluation and determination of the gaming outcome.

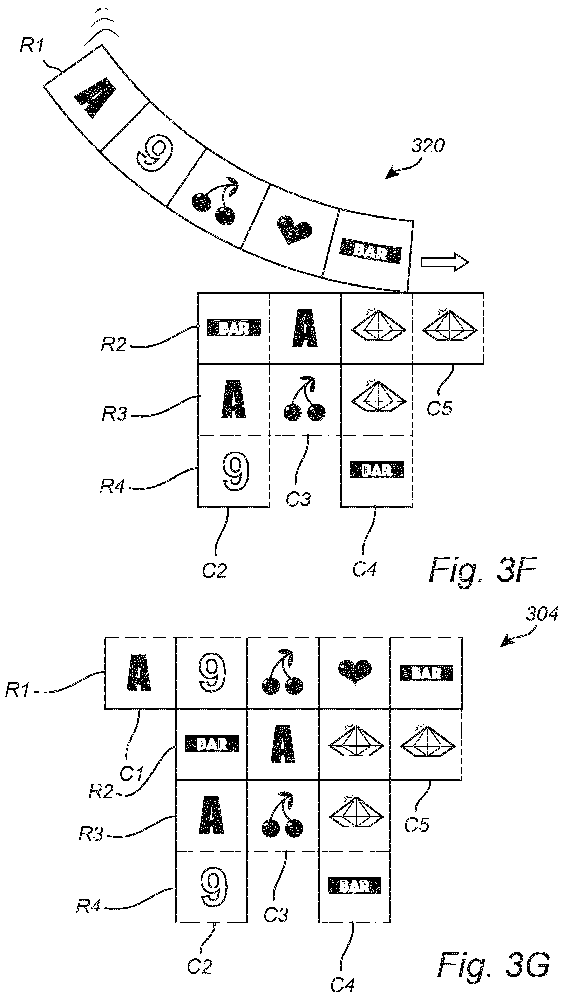

The table may be further manipulated as is outlined in Figs. 3E - 3G. Here, in Fig. 3E, three of the columns (C1, C2 and C3) are "hit" by the removal of cells. Column C1 to such an extent that the full column is removed. This is however quickly handled when a still further row 320 of elements is "sailing in" at the top of the table, as is illustrated in Fig. 3F. An updated table 304 following the introduction of the additional row is visualized in Fig. 3G.

The table manipulation may as such progress as long as the player is requesting to continue to play the game. However, a "win" could also potentially reset the table back to the base structure. Specific type of elements may also ensure that the table is reset back to the base structure.

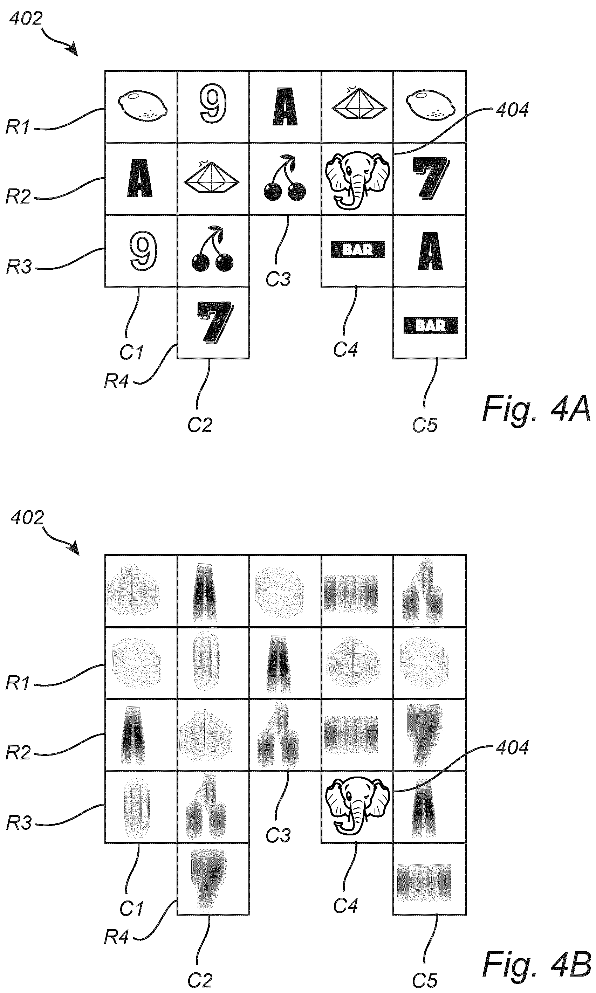

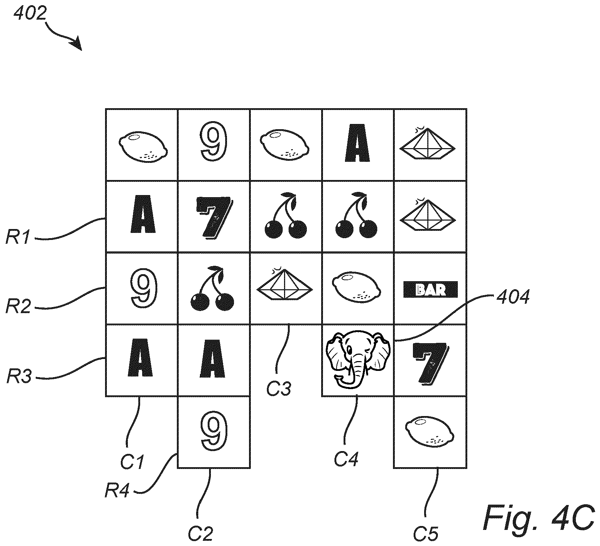

A further exemplary demonstration of the way the table may be updated is presented in Figs. 4A - 4C. Specifically, in Fig. 4A a sticky symbol 404 or joker is located at one of the cells, namely at column C4 - row R2 of a further exemplary grid 402. The columns C1 - C5 of the grid 402 will then, as illustrated in Fig 4B, start to "spin", graphically illustrated at the display of the client device 106 in a similar manner as traditional mechanical real game. However, the sticky 404 will remain while all the further elements of the grid 402 are updated. Additionally, when spinning the columns C1 - C5 also a further row will be introduced at the top of the grid, as is presented in Fig. 4C. The game as exemplified in Figs. 4A - 4C may then be allowed to progress in a similar manner as is presented in relation to Figs. 3A - 3G, where e.g. a random number of cells are "removed" from the bottom of the grid 402.

Within the context of the present disclosure and the above discussed embodiment, the gaming system may in some embodiments employ a centralized mechanism for updating the game table on the server, controlling which cells within the table require updating based on game logic and player interactions. Upon determining that a cell update is necessary, the server sends only the modified cell data to the client device, rather than refreshing the entire game state. Such a targeted updating process enhances real-time responsiveness by reducing the volume of data transmitted to the client and lowering the device's processing demand, ensuring that players experience smooth gameplay without interruptions. The suggested method allows the server to manage high-frequency updates effectively, supporting fast-paced gaming environments where rapid state changes are common.

The control functionality of the present disclosure may be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. When information is transferred or provided over a network or another communications connection (either hardwired, wireless, or a combination of hardwired or wireless) to a machine, the machine properly views the connection as a machine-readable medium. Thus, any such connection is properly termed a machine-readable medium. Combinations of the above are also included within the scope of machine-readable media. Machine-executable instructions include, for example, instructions and data which cause a general-purpose computer, special purpose computer, or special purpose processing machines to perform a certain function or group of functions.

Although the figures may show a sequence the order of the steps may differ from what is depicted. Also two or more steps may be performed concurrently or with partial concurrence. Such variation will depend on the software and hardware systems chosen and on designer choice. All such variations are within the scope of the disclosure. Likewise, software implementations could be accomplished with standard programming techniques with rule-based logic and other logic to accomplish the various connection steps, processing steps, comparison steps and decision steps. Additionally, even though the present disclosure has been described with reference to specific exemplifying embodiments thereof, many different alterations, modifications and the like will become apparent for those skilled in the art. Further, a single unit may perform the functions of several means recited in the claims. In the claims, any reference signs placed between parentheses shall not be construed as limiting to the claim. Furthermore, in the claims, the word "comprising" does not exclude other elements or steps, and the indefinite article "a" or "an" does not exclude a plurality.

Variations to the disclosed embodiments can be understood and effected by the skilled addressee in practicing the claimed present disclosure, from a study of the drawings, the disclosure, and the appended claims. The person skilled in the art realizes that the present disclosure is not limited to the preferred embodiments.

## Claims

1. A computer implemented method performed by a gaming system, the gaming system comprising a server arranged in communication with an electronic user device using a network connection, the electronic user device comprising a display screen, the gaming system arranged to operate a series of consecutive games, wherein the method comprises, for each of the plurality of consecutive games, the steps of:
- receiving, at the server, a request from the electronic user device to play a game provided by the server, the request comprising a wagering bet,
- forming, using the server, a table in the form of a grid, wherein:
- a dimension of the grid is variable,
- the grid comprises a number of cells matching the variable grid dimension,
- the number of cells of the table is variable between a predefined minimum number of cells and a predefined maximum number of cells, and
- the grid comprises an upper end and a lower end,
- generating, at the server, a set of elements corresponding to the cells of the table, each generated element being one of a plurality of predefined element types,
- populating, using the server, the cells of the table with the set of elements,
- directing, using the server, the electronic user device to display the table at the display screen,
- determining, using the server and by applying a predefined matching scheme, a matching level between the cells populating the table and each of a plurality of predefined cluster formations stored at the server,
- determining, using the server, a gaming outcome based on the matching level and the wagering bet,
- removing, using the server, a first number of cells at the lower end of the table,
- adding, using the server, a second number of cells at the upper end of the table, wherein the second number of cells at the upper end of the table are populated with a further set of the predefined element types.

2. The method according to claim 1, wherein at least one of the first and the second number of cells are selected based on a present number of cells compared to the minimum and maximum number of cells.

3. The method according to any one of claims 1 and 2, wherein at least one of the first and the second number of cells are at least partly randomly selected.

4. The method according to claim 3, wherein the server comprises a random number generator configured to generate at least one of the first and the second number of cells.

5. The method according to any one of claims 1 and 2, wherein the second number of cells are selected to match a width of the grid, and the width of the grid is fixed for the series of consecutive games.

6. The method according to any one of claims 1-4, wherein a width of the grid is fixed and a height of the grid is variable.

7. The method according to any one of the preceding claims, wherein the predefined matching scheme includes identifying patterns or sequences of elements within the grid, and the matching level is determined based on at least one of the number and type of patterns and the sequences identified.

8. The method according to any one of the preceding claims, wherein at least a portion of the set of elements is updated, by the server, for each of the plurality of consecutive games.

9. The method according to claim 8, wherein the set of elements comprises at least one of a multiplication factor and a sticky symbol.

10. The method according to claim 9, wherein the multiplication factor or the sticky symbol remains with the grid for a predefined number of consecutive games.

11. The method according to any one of the preceding claims, further comprising the steps of:
- rendering, using the server, a graphical illustration of the gaming outcome, and
- directing, using the server, the electronic user device to display, at the display screen, the graphical illustration of the gaming outcome.

12. A gaming system arranged to operate a series of consecutive games, the gaming system comprising a server arranged in communication with an electronic user device using a network connection, the electronic user device comprising a display screen, wherein the server is arranged to, for each of the plurality of consecutive games:
- receive a request from the electronic user device to play a game provided by the server, the request comprising a wagering bet,
- form a table in the form of a grid, wherein:
- a dimension of the grid is variable,
- the grid comprises a number of cells matching the variable grid dimension,
- the number of cells of the table is variable between a predefined minimum number of cells and a predefined maximum number of cells, and
- the grid comprises an upper end and a lower end,
- generate a set of elements corresponding to the cells of the table, each generated element being one of a plurality of predefined element types,
- populate the cells of the table with the set of elements,
- direct the electronic user device to display the table at the display screen,
- determine, by applying a predefined matching scheme, a matching level between the cells populating the table and each of a plurality of predefined cluster formations stored at the server,
- determine a gaming outcome based on the matching level and the wagering bet,
- remove a first number of cells at the lower end of the table,
- add a second number of cells at the upper end of the table, wherein the second number of cells at the upper end of the table are populated with a further set of the predefined element types.

13. The gaming system according to claim 12, wherein at least one of the first and the second number of cells are at least partly randomly selected.

14. The gaming system according to claim 13, wherein the server comprises a random number generator configured to generate at least one of the first and the second number of cells.

15. A computer program product comprising instructions which, when executed by a computer or processor, cause a gaming system to operate a series of consecutive games, the gaming system comprising a server arranged in communication with an electronic user device using a network connection, the electronic user device comprising a display screen, wherein the computer program product is executed for each of the plurality of consecutive games and comprises:
- code for receiving, at the server, a request from the electronic user device to play a game provided by the server, the request comprising a wagering bet,
- code for forming, using the server, a table in the form of a grid, wherein:
- a dimension of the grid is variable,
- the grid comprises a number of cells matching the variable grid dimension,
- the number of cells of the table is variable between a predefined minimum number of cells and a predefined maximum number of cells, and
- the grid comprises an upper end and a lower end,
- code for generating, at the server, a set of elements corresponding to the cells of the table, each generated element being one of a plurality of predefined element types,
- code for populating, using the server, the cells of the table with the set of elements,
- code for directing, using the server, the electronic user device to display the table at the display screen,
- code for determining, using the server and by applying a predefined matching scheme, a matching level between the cells populating the table and each of a plurality of predefined cluster formations stored at the server,
- code for determining, using the server, a gaming outcome based on the matching level and the wagering bet,
- code for removing, using the server, a first number of cells at the lower end of the table,
- code for adding, using the server, a second number of cells at the upper end of the table, wherein the second number of cells at the upper end of the table are populated with a further set of the predefined element types.
